# EUROPÄISCHE PATENTANMELDUNG

(11) **EP 1 780 595 A1**
(43) Veröffentlichungstag der Anmeldung: **02.05.2007**
(21) Anmeldenummer: 06000242.5
(22) Anmeldetag: 07.01.2006
(51) Int. Cl.: G03B 21/56, G03B 21/14, H04N 5/64, F16M 11/18

(54) **Höhenverstellbare Arbeits- und Projektionstafel und höhenverstellbarer Projektor**

(30) Priorität: 28.10.2005 DE 202005016926 U
(71) Anmelder: Promethean GmbH, 45127 Essen (DE)
(72) Erfinder: Hövel, Michael, 48708 Stadtlohn (DE)
(74) Vertreter: Habbel, Hans-Georg

(57) **Zusammenfassung**

Die Erfindung betrifft eine höhenverstellbare Arbeits- und Projektionstafel, die mit einem höhenverstellbaren Projektionsgerät zusammenarbeitet, wobei die Projektionstafel und das Projektionsgerät in ihrer Stellung aufeinander abgestimmt sind und das Projektionsgerät höhenverstellbar an der Raumdecke angeordnet wird, während die Projektionstafel vorzugsweise höhenverstellbar an einer Raumwand angeordnet ist. Hierbei ist eine Kopplung derart vorgesehen, daß bei einer Verstellung der Projektionswand motorisch das Projektionsgerät um den gleichen Verstellweg bewegt wird.

## Beschreibung

Die Erfindung bezieht sich auf eine höhenverstellbare Arbeits-und Projektionstafel, die mit einem Projektionsgerät zusammenarbeitet, wobei die beiden Geräte in ihrer Stellung aufeinander abgestimmt sein müssen.

Im Sprachgebrauch wird die Projektionstafel in gewissen Bereichen auch als "Whiteboard" und das Projektionsgerät als "Beamer" bezeichnet.

Das Projektionsgerät ist dabei höhenverstellbar vorzugsweise an der Raumdecke angeordnet und die Projektionstafel z. B. höhenverstellbar an einer Raumwand.

Hierbei ist es immer wieder notwendig, daß die Tafel in ihrer Höhenlage verstellt wird, z. B. das Aktivboard, das das Herzstück eines interaktiven Klassenzimmers darstellt, muß natürlich auf die Höhe der das Board benutzenden Person eingestellt werden, beispielsweise Kinder in der Schule oder Erwachsene in einem Schulungskursus. Auf diese interaktiven Tafel schreibt man mit einem Stift, der die gleiche Funktionalität wie eine Computermaus aufweist. Die eigentliche Tafel, die mit reflektionsarmem Melamin beschichtet ist, bietet eine optimale Projektionsfläche und arbeitet mit einem Projektionsgerät zusammen, das in einem gewissen Abstand von der Tafel, vorzugsweise an der Decke befestigt ist. Wird nun die Tafel in ihrer Höhenlage verstellt, ist es natürlich auch erforderlich, daß das Projektionsgerät in der Höhe verstellt wird.

Bisher bereitete diese Verstellung, die aufeinander abgestimmt sein muß, Schwierigkeiten, da die Ausrichtung des Projektionsgerätes genau gegenüber der Tafel arbeitet, d. h. der vom Projektionsgerät ausgehende Strahl soll immer im gleichen Winkel auf die Projektionstafel auftreffen.

Der Erfindung liegt daher die Aufgabe zugrunde, eine Steuerung zu schaffen, die sicherstellt, daß dann, wenn die Projektionstafel verstellt wird, auch das Projektionsgerät in gleichem Maße verstellt wird, so daß sichergestellt ist, daß der Strahl des Projektionsgerätes immer im gleichen Winkel auf die Projektionstafel auftrifft.

Diese der Erfindung zugrundeliegende Aufgabe wird durch die Lehre des Hauptanspruches und des ersten Unteranspruches gelöst.

Ein anderer Lösungsweg wird in dem selbständigen Anspruch 3 und den Unteransprüchen 4 und 5 gelöst.

Mit anderen Worten ausgedrückt wird vorgeschlagen, daß einmal so vorgegangen wird, daß bei manueller Höhenverstellung der Projektionstafel die Höhenverstellung des Projektionsgerätes motorisch erfolgt und der Verstellweg der Projektionstafel die Verstellung des Projektionsgerätes steuert.

Hierbei kann so vorgegangen werden, daß z. B. die Projektionstafel mit einem Impulsgeber, sei es einer Lichtschranke oder eine sonstige elektrische oder elektronische Steuerung, versehen ist und daß hierdurch die Verstellung des Projektionsgerätes eingeleitet wird. Das Projektionsgerät kann dabei beispielsweise ganz in seine höchste Ausgangslage bewegt werden und wird dann wieder zurückgefahren auf die von der Projektionstafel vorgegebene Stellung. Ein anderer Weg, die der Erfindung zugrundeliegende Aufgabe zu lösen, ist darin zu sehen, daß die Projektionstafel und das Projektionsgerät mit einem elektromotorischen Antrieb zum Zwecke der Höhenverstellung versehen sind und daß eine Steuerung vorgesehen ist, die die Verstellweglänge gleichschaltet. Hierbei steuert also ein Motor die beiden Höhenbewegungen der Bauteile, d. h. der Projektionstafel und des Projektionsgerätes.

Gemäß einem weiteren Merkmal der Erfindung kann aber auch so vorgegangen werden, daß sowohl die Projektionstafel wie auch das Projektionsgerät mit je einem elektromotorischen Antrieb ausgerüstet sind, wobei eine Steuerung die beiden Antriebe in ihrer Verstellweglänge gleichschaltet.

Gemäß einem Merkmal der Erfindung ist vorzugsweise die Projektionstafel z. B. an einer Raumwand angeordnet und wird in entsprechenden Führungen an dieser Raumwand geführt.

Die Verstellbewegung der Projektionstafel wird bei den zuletzt genannten Vorschlägen von einem zentralen Punkt aus in die Wege geleitet, wobei gleichzeitig durch die Betätigung dieser Steuerung auch die Verstellung des Projektionsgerätes vorgenommen wird, und zwar verschiebt sich das Projektionsgerät um das gleiche Maß wie die Projektionstafel nach oben oder unten, so daß sichergestellt ist, daß der vom Projektionsgerät ausgehende Strahl immer im gleichen Winkel auf die Projektionstafel auftrifft.

Durch die erfindungsgemäße Verstellung entfällt als die Kalibrierung der Projektionsfläche.

## Patentansprüche

1. Höhenverstellbare Arbeits- und Projektionstafel, die mit einem Projektionsgerät zusammenarbeitet, wobei die Tafel und das Projektionsgerät in ihrer Stellung aufeinander abgestimmt sind und das Projektionsgerät höhenverstellbar an der Raumdecke angeordnet ist, **dadurch gekennzeichnet, daß** bei manueller Höhenverstellung der Projektionstafel die Höhenverstellung des Projektionsgerätes motorisch erfolgt und der Verstellweg der Projektionstafel die Verstellung und den Verstellweg des Projektionsgerätes steuert.

2. Höhenverstellbare Arbeits- und Projektionstafel nach Anspruch 1, **dadurch gekennzeichnet, daß** die Projektionstafel mit einem Impulsgeber für die motorische Verstellung des Projektionsgerätes versehen ist.

3. Höhenverstellbare Arbeits- und Projektionstafel, die mit einem Projektionsgerät zusammenarbeitet, wobei die Tafel und das Projektionsgerät in ihrer Stellung aufeinander abgestimmt sind und das Projektionsgerät höhenvestellbar an der Raumdecke angeordnet ist, **dadurch gekennzeichnet, daß** die Projektionstafel und das Projektionsgerät mit einem motorischen Antrieb zum Zwecke der Höhenverstellung versehen sind und eine Steuerung die Länge ihres Verstellweges gleichschaltet.

4. Höhenverstellbare Arbeits- und Projektionstafel nach Anspruch 3, **dadurch gekennzeichnet, daß** die Projektionstafel und das Projektionsgerät mit je einem motorischen Antrieb zum Zwecke der Höhenverstellung versehen sind.

5. Höhenverstellbare Arbeits- und Projektionstafel nach einem oder mehreren der vorhergehenden Ansprüche, **dadurch gekennzeichnet, daß** die Projektionstafel höhenverstellbar an einer Raumwand angeordnet ist.
